# EUROPEAN PATENT APPLICATION

(11) **EP 4 789 917 A1**
(43) Date of publication of application: **12.08.2026**
(21) Application number: 26156639.2
(22) Date of filing: 05.02.2026
(51) Int. Cl.: B60P 7/13

(54) **SYSTEM AND METHOD OF ELECTRONICALLY MONITORING OF ENGAGEMENT OF INTERMODAL CONTAINER WITH TRANSPORT CHASSIS RETAINING MECHANISM**

(30) Priority: 07.02.2025 US 202519048425
(71) Applicant: BlackBerry Limited, Waterloo, Ontario N2K 0A7 (CA)
(72) Inventor: JANTZI, Jason Wayne, Waterloo, Ontario, N2K 0A7 (CA); CORLEY, Cortez, Waterloo, Ontario, N2K 0A7 (CA); JIAN, Guo Li, Waterloo, Ontario, N2K 0A7 (CA)
(74) Representative: MERH-IP Matias Erny Reichl Hoffmann Patentanwälte PartG mbB

(57) **Abstract**

A method of determining an engagement state of a retainer mechanism of a transport chassis with an intermodal container. The method comprises sensing a position of the retainer mechanism by a retainer sensor electronic mounted to the transport chassis; transmitting information about the sensed position of the retainer mechanism by the retainer engagement sensor; receiving the information about the sensed position of the retainer mechanism by a electronic unit mounted to the transport chassis; transmitting the information about the sensed position of the retainer mechanism by the electronic unit to a dashboard application executing on a computer system; determining by the dashboard application, based on the information about the sensed position of the retainer mechanism, that the retainer mechanism is not in a securely locked state; and informing a driver of the transport chassis that the retainer mechanism is not in a securely locked state.

## Description

### CROSS-REFERENCE TO RELATED APPLICATIONS

None.

### STATEMENT REGARDING FEDERALLY SPONSORED RESEARCH OR DEVELOPMENT

Not applicable.

### REFERENCE TO A MICROFICHE APPENDIX

Not applicable.

### BACKGROUND

Electronic units may be mounted to transport chassis to determine a location of the transport chassis and report that location to an application, whereby the application is able to track the location of the transport chassis and other like equipped transport chassis. This information may be made available to freight shippers and/or transportation companies. The transport chassis may be configured to accept intermodal shipping containers such that containers on a container ship arrived in port may be moved onto the transport chassis, and the transport chassis driven by a tractor or truck cab to a final destination of the container. Such containers may also be transported on train cars to a railyard, the container removed from the train car, moved from the train car onto the transport chassis, and the transport chassis driven by a tractor or truck cab to a final destination of the container. Containers can likewise be picked up and installed on a transport chassis, driven by a tractor or truck cab to a railyard or port, the container removed from the transport chassis, and the container placed upon a train car or on a container ship for transport.

### SUMMARY

In an embodiment, a transport chassis to intermodal container retainer engagement monitoring system is disclosed. The system comprises a retainer mechanism mounted to a transport chassis, wherein the retainer mechanism is configured to engage with and retain an intermodal container disposed on top of the transport chassis; a retainer engagement sensor that comprises a sensor and a first radio transceiver, wherein the retainer engagement sensor is configured to detect an engagement position of the retainer mechanism; and an electronic unit mounted to the transport chassis. The electronic unit comprises a second radio transceiver and a third radio transceiver, a processor, a memory, and an application stored in a non-transitory portion of the memory. When executed by the processor, the application receives a retainer engagement state indication from the first radio transceiver via the second radio transceiver, determines an engagement state of the retainer mechanism based on the retainer engagement state indication, and transmits information about the engagement state via the third radio transceiver.

In another embodiment, a method of determining an engagement state of a retainer mechanism of a transport chassis with an intermodal container is disclosed. The method comprises sensing a position of the retainer mechanism by a retainer engagement sensor, wherein the retainer engagement sensor is mounted to the transport chassis; transmitting information about the sensed position of the retainer mechanism by a first radio transceiver of the retainer engagement sensor; receiving the information about the sensed position of the retainer mechanism by a second radio transceiver of an electronic unit, wherein the electronic unit is mounted to the transport chassis; determining an engagement state of the retainer mechanism by the electronic unit; and transmitting information about the engagement state of the retainer mechanism by a third radio transceiver of the electronic unit.

In yet another embodiment, a method of determining an engagement state of a retainer mechanism of a transport chassis with an intermodal container is disclosed. The method comprises sensing a position of the retainer mechanism by a retainer engagement sensor, wherein the retainer engagement sensor is mounted to the transport chassis; transmitting information about the sensed position of the retainer mechanism by a radio transceiver of the retainer engagement sensor; and receiving the information about the sensed position of the retainer mechanism by an electronic unit, wherein the electronic unit is mounted to the transport chassis. The method further comprises transmitting the information about the sensed position of the retainer mechanism by the electronic unit to a dashboard application executing on a computer system; determining by the dashboard application, based on the information about the sensed position of the retainer mechanism, that the retainer mechanism is not in a securely locked state; and, based on the determination that the retainer mechanism is not in a securely locked state, informing a driver of the transport chassis that the retainer mechanism is not in a securely locked state.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1A is an illustration of a transport chassis and an intermodal container from a side viewpoint according to an embodiment of the disclosure.
FIG. 1B is an illustration of a transport chassis from a viewpoint above the transport chassis according to an embodiment of the disclosure.
FIG. 2A and FIG. 2B are illustrations of a retainer mechanism in an unlocked position viewed from above and viewed from the side according to an embodiment of the disclosure.
FIG. 2C and FIG. 2D are illustrations of the retainer mechanism in a locked position viewed from above and viewed from the side according to an embodiment of the disclosure.
FIG. 2E and FIG. 2F are illustrations of the retainer mechanism in an intermediate position viewed from above and viewed from the side according to an embodiment of the disclosure.
FIG. 3 is a block diagram of a communication system according to an embodiment of the disclosure.
FIG. 4 is a block diagram of an electronic unit and a retainer engagement sensor according to an embodiment of the disclosure.
FIG. 5 is a flowchart of a method according to an embodiment of the disclosure.
FIG. 6 is a flowchart of another method according to an embodiment of the disclosure.
FIG. 7 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

The present disclosure teaches a system and method of electronically monitoring engagement of an intermodal shipping container with a transport chassis retaining mechanism. A transport chassis may be referred to with different terms such as a container chassis, an intermodal chassis, or a skeletal trailer. The transport chassis is a kind of semitrailer designed to receive and carry intermodal shipping containers. A transport chassis may be loaded with an intermodal container at a railyard or a port, the intermodal container may be secured to the transport chassis with a retainer mechanism, and the transport chassis may then be towed by a tractor or truck to a final destination. At the final destination, the retainer mechanism may be released, and the intermodal container may be lifted off the transport chassis. Alternatively, the transport chassis may be loaded with the intermodal container at a source location (e.g., at a manufacturing site), the intermodal container may be secured to the transport chassis with the retainer mechanism, and the transport chassis may then be towed by a tractor or truck to a port or a railyard. At the port or railyard, the retainer mechanism may be released, and the intermodal container may be lifted off the transport chassis. It is desirable that the intermodal container remain secured to the transport chassis by the retainer mechanism while in transit. If the retainer mechanism releases during transport, the intermodal container may fall off the transport chassis, creating a hazard for road traffic and likely damaging the contents of the intermodal container. In the past, plastic zip-ties may have been used to maintain the retainer mechanism in a locked state. But plastic zip-ties can be damaged by debris on roadways or by outright vandalism.

The present disclosure teaches a retainer engagement sensor that is positioned on the transport chassis near the retainer mechanism. The retainer engagement sensor can detect the state of the retainer mechanism and transmit state information via a wireless communication link to an electronic unit mounted to the transport chassis. The electronic unit can analyze the state information and determine if the retainer mechanism is in a locked state or an unlocked state. In an embodiment, the electronic unit is able to determine if the retainer mechanism is in a locked state, in an unlocked state, or an intermediate state (e.g., between a locked position and a fully unlocked position). The electronic unit can provide a notification if the retainer mechanism is in an unlocked state or in an intermediate state. The notification may be transmitted via a cellular radio transceiver of the electronic unit via a cellular network to a dashboard application executing on a computer system. An operator of the dashboard may learn of the unlocked or intermediate state of the retainer mechanism and call the driver of the transport chassis to notify the driver to pull-over and return the retainer mechanism to the locked state before continuing driving. The notification may be presented via a coded signal emitted by trailer lights of the transport chassis under command of the electronic unit. The notification may be transmitted from the electronic unit via a wireless communication link to an in-cab device to be presented visually to the driver of the transport chassis.

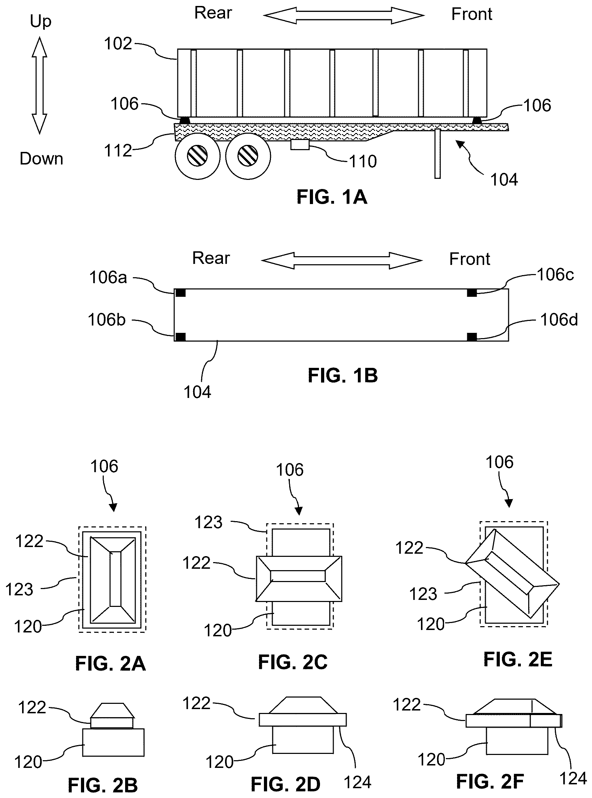

Turning now to FIG. 1A and FIG. 1B a transport chassis 104 and an intermodal shipping container 102 are described. The intermodal container 102 may be secured to the transport chassis 104 by a plurality of retainer mechanisms 106. For example, the intermodal container 102 may be secured to the transport chassis 104 by a first retainer mechanism 106a, a second retainer mechanism 106b, a third retainer mechanism 106c, and a fourth retainer mechanism 106d. It will be appreciated that the teachings of the present disclosure contemplates other numbers of retainer mechanisms 106 and different physical locations of retainer mechanisms in different embodiments. An electronic unit 110 is mounted to the transport chassis 104. The electronic unit 110 is discussed further herein after. In an embodiment, one or more signal lights 112 are located at a rear of the transport chassis 104. In an embodiment, some of the signal lights are anti-lock brake system (ABS) signal lights.

It is contemplated that a variety of different retainer mechanisms 106 may be used to secure the intermodal container 102 to the transport chassis 104. In embodiment, the retainer mechanisms 106 may be twist-lock type retaining mechanisms, for example bolsters with a twist-lock retaining mechanism. In an embodiment, the retainer mechanisms 106 may be pin-lock type retaining mechanisms. In an embodiment, yet a different type of retainer mechanism 106 may be employed to secure the intermodal container 102 to the transport chassis 104.

Turning now to FIG. 2A, FIG. 2B, FIG. 2C, FIG. 2D, FIG. 2E, and FIG.2 F, an exemplary twist-lock type retainer mechanism 106 is described. FIG. 2A and FIG. 2B illustrate the retainer mechanism 106 in an unlocked state. FIG. 2A is a view looking down on the retainer mechanism 106 from above. FIG. 2B is a view looking at the retainer mechanism 106 from the side. FIG. 2C and FIG. 2D illustrate the retainer mechanism 106 in a locked state. FIG. 2C is a view looking down on the retainer mechanism 106 from above. FIG. 2D is a view looking at the retainer mechanism 106 from the side. FIG. 2E and FIG. 2F illustrate the retainer mechanism 106 in an intermediate state (e.g., between the fully locked state and the fully unlocked state). FIG. 2E is a view looking down on the retainer mechanism 106 from above. FIG. 2F is a view looking at the retainer mechanism 106 from the side.

As seen in FIG. 2B, in an embodiment, the retainer mechanism 106 comprises a base portion 120 and a rotating lock portion 122. The base portion 120 may be mounted to a top of the transport chassis 104 such that the top of the base portion 120 is flush with the top surface of the transport chassis 104 or projects slightly above the top surface of the transport chassis 104. In an embodiment, the rotating lock portion 122 may be surmounted by a truncated pyramid shape that may assist in guiding mating retaining fixtures of the intermodal container 102 into alignment with the retaining mechanism 106. In the unlocked position, the retainer mechanism 106 is able to receive an aperture 123 in the mating retaining fixtures of the intermodal container 102. When the intermodal container 102 is positioned in proper alignment on the transport chassis 104, such that the apertures 123 of the mating retaining fixtures of the intermodal container 102 are received by the retainer mechanisms 106, the intermodal container 102 tends to remain in position by dint of gravity and the projection upwards of the rotating lock portion 122 into the aperture 123.

When the intermodal container 102 is placed so the aperture 123 receives the rotating lock portion 122 of the retainer mechanism 106, the retaining mechanism 106 can be operated to rotate or twist the rotating lock portion 122 of the retainer mechanism 106 into the locked position. In the locked position, the underside of the rotating lock portion 122 defines a shoulder 124 that captures and retains the mating retaining fixture of the intermodal container 102. Note that the dotted line indicating the aperture 123 is overlapped by the rotating lock portion 122, capturing and retaining the mating retaining fixture of the intermodal container 102. In an embodiment, the rotating lock portion 122 may be retained in a locked position or in the unlocked position by a spring in the retainer mechanism 106, such that significant force is needed to compress the spring when changing the position of the rotating lock portion 122 (e.g., more force than would be generated by ordinary roadway impacts of wheels with potholes or road surface bumps).

The rotating lock portion 122 in FIG. 2E and FIG. 2F is in an intermediate state between locked and unlocked. While in this intermediate state, the rotating lock portion 122 may still capture and retain the mating retaining fixture of the intermodal container 102, but the rotating lock portion 122 may not be prevented from changing its rotational position in response to roadway induced vibrations (e.g., the spring may not keep the rotating lock portion 122 from rotating), and the rotating lock portion 122 may migrate over time into the unlocked state. Thus, the intermediate state is an inherently unsafe state of the rotating lock portion 122 when the transport chassis 104 is being towed over the roadway.

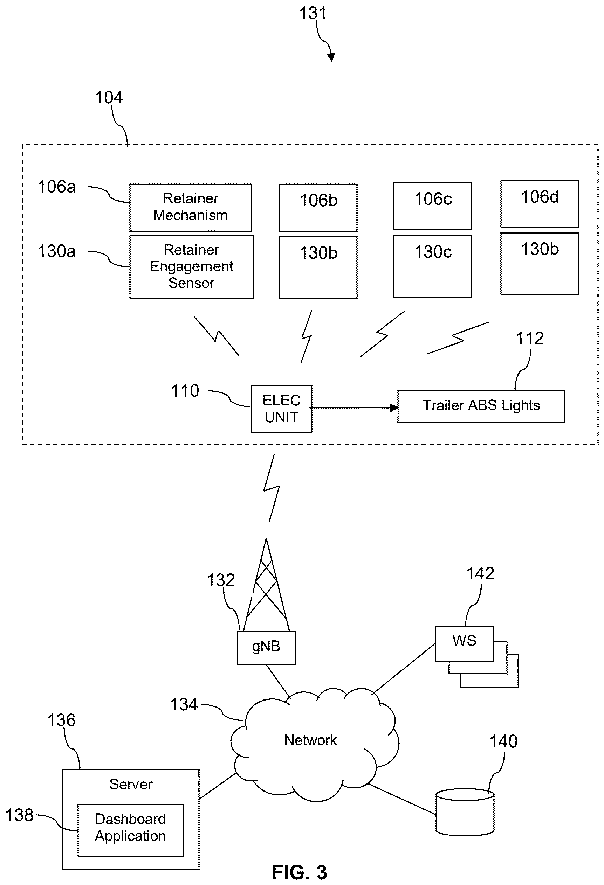

Turning now to FIG. 3, a communication system 131 is described. In an embodiment, the system 131 comprises the electronic unit 110, a first retainer engagement sensor 130a associated with the first retainer mechanism 106a, a second retainer engagement sensor 130b associated with the second retainer mechanism 106b, a third retainer engagement sensor 130c associated with the third retainer mechanism 106c, and a fourth retainer engagement sensor 130d associated with the fourth retainer mechanism 106d. The retainer engagement sensors 130a, 130b, 130c, 130d are each physically proximate to their associated retainer mechanism 106a, 106b, 106c, 106d such that each retainer engagement sensor 130a, 130b, 130c, 130d is able to sense the state of its associated retainer mechanism 106a, 106b, 106c, 106d, for example the state of the rotating lock portion 122 of the retainer mechanism 106. The retainer engagement sensors 130a, 130b, 130c, 130d are able to establish a wireless communication link with the electronic unit 110 and transmit the state of the retainer mechanisms 106a, 106b, 106c, 106d to the electronic unit 110.

The system 131 further comprises a cell site 132 that may provide a wireless communication link to the electronic unit 110 according to a 6G, a 5G, a Long-Term Evolution (LTE), a Code Division Multiple Access (CDMA), a Global System for Mobile communication (GSM), an Enhanced Data rates for GSM Evolution (EDGE), and/or a Universal Terrestrial Radio Access Network (UTRAN) telecommunications protocol. The cell site 132 is communicative coupled to a network 134, hence the electronic unit 110 is communicatively coupled to the network 134 via the cell site 132. In an embodiment, the network comprises one or more public networks, one or more private networks, or a combination thereof. While a single cell site 132 is illustrated in FIG. 3, it is understood that the system 131 may include any number of cell sites 132. Likewise, while a single transport chassis 104 is illustrated in FIG. 3, it is understood that the system 131 may include a great number of like transport chassis 104.

The system 131 further comprises a computer 136 that executes a dashboard application 138. Computers are discussed further herein after. The computer 136 is communicatively coupled to the network 134. In an embodiment, the computer 136 is located in a cloud computing environment and the dashboard application 138 executes on a virtual server in the cloud computing environment. The system 131 further comprises a data store 140 that is communicatively coupled to the network 134. In an embodiment, the data store 140 provides storage resources in a cloud computing environment. In embodiment, the system 131 further comprises a plurality of workstations 142 that users may employ to access information via an application programming interface (API) extended by the dashboard application 138. In this way, users may inform themselves of the status of the transport chassis 104, for example confirming the locked, unlocked, or intermediate status of one or more retainer mechanisms 106 of the transport chassis 104. Users may be operators or employees of trucking companies.

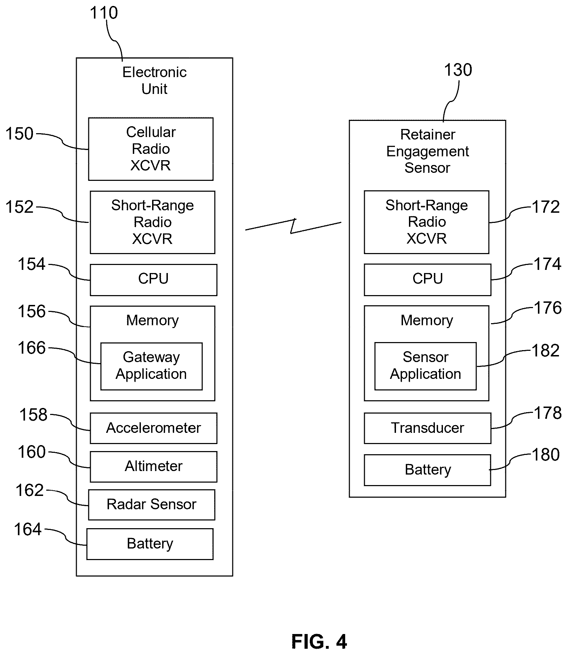

Turning now to FIG. 4, further details of the electronic unit 110 and of the retainer engagement sensor 130 are described. In some contexts, the electronic unit 110 may be referred to by other terms such as a electronic unit, a radar gateway device, or an asset tracking device. In an embodiment, the electronic unit 110 comprises a cellular radio transceiver 150, a short-range radio transceiver 152, a processor 154, a memory 156, an accelerometer 158, an altimeter 160, optionally a radar sensor 162, and a battery 164. In an embodiment, a non-transitory portion of the memory 146 stores a gateway application 166. The cellular radio transceiver 150 may be configured to establish a wireless communication link with a cell site according to a 6G, a 5G, a Long-Term Evolution (LTE), a Code Division Multiple Access (CDMA), a Global System for Mobile communication (GSM), an Enhanced Data rates for GSM Evolution (EDGE), and/or a Universal Terrestrial Radio Access Network (UTRAN) telecommunications protocol.

The short-range radio transceiver 152 may be configured to establish a wireless communication link according to a Bluetooth, a WiFi, a ZigBee, a Bluetooth Low Energy (BLE), IEEE 802.15, or other short-range wireless communication protocol. In an embodiment, the short-range radio transceiver 152 may be able to establish a wireless link with another radio at a distance of a maximum of 200 feet, a maximum of 150 feet, a maximum of 100 feet, a maximum of 75 feet, a maximum of 50 feet, a maximum of 40 feet, a maximum of 35 feet, or some other maximum range less than 300 feet. By contrast, in an embodiment, the cellular radio transceiver 150 may be able to establish a wireless link with a cell site at a distance of a maximum of 20 miles, a maximum of 15 miles, a maximum of 10 miles, a maximum of 7 miles, a maximum of 5 miles, a maximum of 3 miles, or some other maximum range greater than 1 mile. In an embodiment, some instances of the electronic unit 110 may have only the short-range radio transceiver 152 and may not have the cellular radio transceiver 150.

The processor 154 may comprise one or more microprocessor, microcontroller, digital signal processor (DSP), application specific integrated circuit (ASIC), field programmable gate array (FPGA), or other forms of semi-conductor implemented logic processors. In an embodiment, the processor 154 is communicatively coupled to the cellular radio transceiver 150, the short-range radio transceiver 152, the memory 156, the accelerometer 158, the altimeter 160, and the optional radar sensor 162. The battery 164 may be coupled to each of the components 150, 152, 154, 156, 158, 160, 162 of the electronic unit 110, whereby to provide electric power to those components. The battery 164 may be a replaceable battery and/or a rechargeable battery. In an embodiment, the electronic unit 110 further comprises circuitry to recharge the battery 164 from an external source of power.

The accelerometer 158 may be a multi-axis accelerometer. The accelerometer 158 may be a 3-axis accelerometer. The accelerometer 158 may output a signal for each axis of acceleration that can be analyzed by the processor 154. Alternatively, the accelerometer 158 may analyze the indications of its axes, generate a single signal or digital message that represents the combination of the separate acceleration indications of the multiple axes, and transmit the signal or message to the processor 154. In an embodiment, the accelerometer 158 is an accelerometer and gyro assembly that is able to output an indication of linear acceleration for each of three axes of linear motion and is able to output an indication of rotational acceleration for each of three axes of rotation. The altimeter 160 outputs a signal that can be analyzed by the processor 154 to determine an elevation of the electronic unit 110 (and by implication the elevation of the transport chassis 104 to which the electronic unit 110 is mounted). Alternatively, the altimeter 160 analyzes indications of elevation, generates a signal or message that represents the elevation determined by the altimeter 160, and transmits the signal or message to the processor 154. In an embodiment, the altimeter 160 senses air pressure and provides elevation information that is based on the sensed air pressure. In an embodiment, the altimeter 160 may send raw sensor data that must be converted by the processor 154 and/or by the gateway application 166 to an equivalent elevation. Alternatively, in another embodiment, the altimeter 160 may convert pressure sensor data to an equivalent or related elevation and output the elevation information. The altimeter 160 may be said in some contexts to sense barometric pressure. The optional radar sensor 162 may employ a mmWave transceiver to determine a distance between the electronic unit 110 and a proximate surface, such as an adjacent transport chassis. The radar sensor 162 may send an indication of the distance to the processor 154.

In an embodiment, the electronic unit 110 determines a location of the electronic unit 110 that serves as a proxy for the location of the transport chassis 104 to which the electronic unit 110 is mounted. In an embodiment, the electronic unit 110 may comprise a global navigation satellite system (GNSS) chip or a global positioning system (GPS) chip that determines location based on signals received from satellites, and the GNSS chip or GPS chip may provide the location of the electronic unit 110. In another embodiment, the electronic unit 110 may determine its location using triangulation location techniques based on received signal strength of radio signals received by the cellular radio transceiver 150 from a plurality of cell sites. The electronic unit 110 may rely on GNSS chip or GPS chip location information at some times and rely on cell site triangulation techniques to locate itself at other times. In some circumstances, for example when the electronic unit 110 is mounted to a transport chassis 104 that is disposed under one or more other transport chassis 104 (as may happen when in a transport chassis stack), signals from satellites may be unavailable to the GNSS chip or GPS chip and in this circumstance the chip may be unable to determine location.

In an embodiment, the retainer engagement sensor 130 comprises a short-range radio transceiver 172, a processor 174, a memory 176, a transducer 178, and a battery 180. A non-transitory portion of the memory 176 stores a sensor application 182. The processor 174 may comprise one or more microprocessor, microcontroller, DSP, ASIC, FPGA, or other forms of semi-conductor implemented logic processors.

The short-range radio transceiver 172 may be configured to establish a wireless communication link according to a Bluetooth, a WiFi, a ZigBee, a Bluetooth Low Energy (BLE), IEEE 802.15, or other short-range wireless communication protocol. In an embodiment, the short-range radio transceiver 172 may be able to establish a wireless link with another radio at a distance of a maximum of 200 feet, a maximum of 150 feet, a maximum of 100 feet, a maximum of 75 feet, a maximum of 50 feet, a maximum of 40 feet, a maximum of 35 feet, or some other maximum range less than 300 feet.

The transducer 178 senses a physical property of the retainer mechanism 106 that it is proximate to and/or in intimate contact with. The transducer 178 generates an electric signal, for example a voltage or a current, based on the physical property that it senses. The electric signal generated by the transducer 178 is converted to a digital signal, either by the transducer 178 itself or by an intermediate analog-to-digital (A/D) converter circuit, and the digital signal is provided to the processor 174. The processor 174 can interpret the digital signal to determine a state of the retainer mechanism 106. In an embodiment, the transducer 178 comprises an accelerometer, wherein the accelerometer is affixed to the retainer mechanism 106 (e.g., affixed to the rotating lock portion 122). In an embodiment, the transducer 178 comprises an accelerometer and gyro assembly, wherein the accelerometer and gyro assembly is affixed to the retainer mechanism 106 (e.g., attached to the rotating lock portion 122). In an embodiment, the transducer 178 comprises a mechanical position switch that is switched one way when the retainer mechanism 106 is in the locked state and switched a second way when the retainer mechanism 106 is in the unlocked state. In an embodiment, the transducer 178 comprises a Hall effect sensor, wherein a magnet may be affixed to the retainer mechanism 106 (e.g., affixed to the rotating lock portion 122), and the Hall effect sensor monitors the state of the retainer mechanism 106 based on its interactions with the magnet affixed to the retainer mechanism 106. In an embodiment, the transducer 178 comprises an optical sensor. In an embodiment, the transducer 178 relies upon a different method of sensing the state of the retainer mechanism 106.

In an embodiment, the processor 174 is communicatively coupled to the short-range radio transceiver 172, the memory 176, and the transducer 178. The battery 180 may be coupled to each of the components 172, 174, 176, 178 of the retainer engagement sensor 130, whereby to provide electric power to those components. The battery 180 may be a replaceable battery and/or a rechargeable battery. In an embodiment, the retainer engagement sensor 130 further comprises circuitry to recharge the battery 180 from an external source of power.

The sensor application 182 may process the electric signal it receives from the transducer 178 in various ways. The sensor application 182 may filter the electric signal received from the transducer 178 to remove noise from the electric signal. The sensor application 182 may convert the value of the electric signal received from the transducer 178 to scale it to an appropriate digital value. The sensor application 182 establishes a radio communication link between the short-range radio transceiver 172 of the retainer engagement sensor 130 and the short-range radio transceiver 152 of the electronic unit 110. The sensor application 182 sends a message via the short-range radio transceiver 172 of the retainer engagement sensor 130 to the short-range radio transceiver 152 of the electronic unit 110.

With reference now to both FIG. 3 and FIG. 4, the electronic unit 110 is able to communicate with all four of the retainer engagement sensors 130a, 130b, 130c, 130d to determine the state of each of the retainer mechanisms 106a, 106b, 106c, 106d. In an embodiment, the retainer engagement sensors 130a, 130b, 130c, 130d initiate a radio communication link with the short-range radio transceiver 152 of the electronic unit 110 only on the event of its detecting a change of state of its associated retainer mechanism 106a, 106b, 106c, 106d. After communicating the changed state of its associated retainer mechanism 106a, 106b, 106c, 106d, the retainer engagement sensor 130a, 130b, 130c, 130d take down the radio communication link with the short-range radio transceiver 152 of the electronic unit 110, whereby to conserve an energy store of its battery 180. Alternatively, the retainer engagement sensors 130a, 130b, 130c, 130d may periodically establish the radio communication link with the short-range radio transceiver 152 of the electronic unit 110 and send a message indicating the current state of its associated retainer mechanism 106a, 106b, 106c, 106d. The retainer engagement sensors 130a, 130b, 130c, 130d may establish a radio communication link with the electronic unit 110 about every 15 seconds, every 30 seconds, every 60 seconds, every 90 seconds, every 120 seconds, every 5 minutes, every 10 minutes, every 15 minutes, or some other periodic interval less than 90 minutes. In an embodiment, the short-range radio transceiver 172 of the retainer engagement sensors 130a, 130b, 130c, 130d may listen for a query from the short-range radio transceiver 152 of the electronic unit 110, and the electronic unit 110 may request the current state of the retainer mechanism 106a, 106b, 106c, 106d from the retainer engagement sensor 130a, 130b, 130c, 130d.

The gateway application 166 can determine the state of the retainer mechanism 106a, 106b, 106c, 106d based on the message transmitted to it by the retainer engagement sensor 130a, 130b, 130c, 130d. The gateway application 166 may transmit a message about the state of the retainer mechanism 106a, 106b, 106c, 106d via the cellular radio transceiver 150 to the cell site 132 and therethrough to the network 134 and to the dashboard application 138 executing on the computer 136. In an embodiment, the gateway application 166 may only transmit state information about the retainer mechanism 106a, 106b, 106c, 106d when the electronic unit 110 detects that the transport chassis 104 is moving. In an embodiment, the gateway application 166 may transmit state information about the retainer mechanism 106a, 106b, 106c, 106d via the cellular radio transceiver 150 at a first periodic rate when the transport chassis 104 is stationary and at a second more frequent periodic rate when the transport chassis 104 is moving. The message transmitted by the gateway application 166 may comprise, in addition to state information about the retainer mechanism 106a, 106b, 106c, 106d, an identity of the transport chassis 104 (e.g., a license plate number or serial number). The message transmitted by the gateway application 166 may comprise a current location of the transport chassis 104.

If the message transmitted by the gateway application 166 to the dashboard application 138 indicates that one or more of the retainer mechanisms 106a, 106b, 106c, 106d is in an unlocked or an intermediate state and that the associated transport chassis 104 is moving, the dashboard application 138 may raise an alarm. For example, the dashboard application 138 may send an alarm to one of the workstations 142 associated with the operator of the subject transport chassis 104. An operator or worker monitoring the workstation 142 may then contact a driver of the subject transport chassis 104 and inform them to securely lock the retainer mechanism 106a, 106b, 106c, 106d that indicated an unlocked or intermediate state. In an embodiment, the dashboard application 138 may have a communication link to an in-cab display of the tractor or truck that is towing the subject transport chassis 104 and immediately alert the driver to the state of the retainer mechanisms 106a, 106b, 106c, 106d. In an embodiment, the electronic unit 110 may have a communication link to the in-cab display of the tractor or truck that is towing the subject transport chassis 104 and immediately alert the driver to the state of the retainer mechanisms 106a, 106b, 106c, 106d. In an embodiment, the electronic unit 110 may send a signaling indication to the signal lights 112 (e.g., to ABS signal lights) at the rear of the transport chassis 104, such that the driver of the transport chassis 104 may know the condition of the retainer mechanism 106a, 106b, 106c, 106d.

In an embodiment, the messages transmitted by the electronic unit 110 to the dashboard application 138 are stored in the datastore 140. The dashboard application 138 may periodically scan through the stored messages about the state of the retainer mechanism 106a, 106b, 106c, 106d associated with a large number of different transport chassis 104 and generate a summary report or audit of these messages. These summary reports or audits may be provided periodically to government oversight organizations or to insurance companies whereby to demonstrate a safe operating record.

In an embodiment, the retainer engagement sensor 130 may be able to establish a radio communication link directly with an in-cab electronic unit or telematics unit of a truck or tractor that pulls the transport chassis 104. In this case, the in-cab electronic unit or telematics unit may present an indication of the state of the retainer mechanisms 106a, 106b, 106c, 106d. In an embodiment, the retainer engagement sensor 130 may be able to establish a radio communication link directly with a smartphone of a driver of the truck or tractor that pulls the transport chassis 104. In this case, an application executing on the smartphone may present an indication of the state of the retainer mechanisms 106a, 106b, 106c, 106d on a display of the smartphone and/or produce an aural alert that the driver hears. In either of these embodiments, the in-cab electronic unit or telematics unit or the smartphone may in turn promulgate the state of the retainer mechanisms 106a, 106b, 106c, 106d to the dashboard application 138 executing on the computer 136, for example via a cellular communication link to the cell site 132.

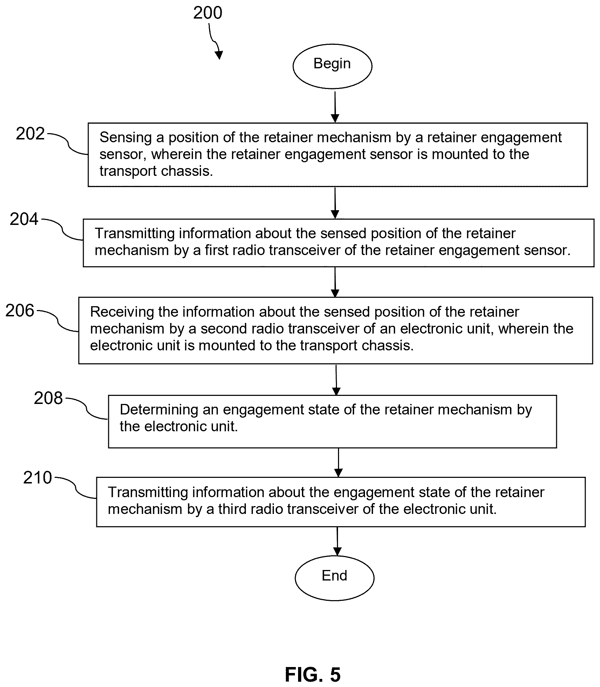

Turning now to FIG. 5, a method 200 is described. In an embodiment, the method 200 is a method of determining an engagement state of a retainer mechanism of a transport chassis with an intermodal container. At block 202, the method 200 comprises sensing a position of the retainer mechanism by a retainer engagement sensor, wherein the retainer engagement sensor is mounted to the transport chassis.

At block 204, the method 200 comprises transmitting information about the sensed position of the retainer mechanism by a first radio transceiver of the retainer engagement sensor. At block 206, the method 200 comprises receiving the information about the sensed position of the retainer mechanism by a second radio transceiver of an electronic unit, wherein the electronic unit is mounted to the transport chassis.

At block 208, the method 200 comprises determining an engagement state of the retainer mechanism by the electronic unit. In an embodiment, the electronic unit determines the engagement state to be one of a locked state or an unlocked state. In an embodiment, the electronic unit determines the engagement state to be one of a locked state, an unlocked state, or an intermediate state. In an embodiment, the intermediate state may be when the position of the rotating lock portion 122 is between the locked position and the unlocked position, for example as illustrated in FIG. 2E and FIG. 2F.

At block 210, the method 200 comprises transmitting information about the engagement state of the retainer mechanism by a third radio transceiver of the electronic unit. In an embodiment, transmitting the information about the engagement state of the retainer mechanism by the third radio transceiver is triggered on the event of a change in the engagement state of the retainer mechanism. In an embodiment, the electronic unit transmits information about the engagement state of the retainer mechanism by the third radio transceiver periodically. In an embodiment, the third radio of the electronic unit is a cellular radio transceiver. In an embodiment, the third radio transceiver of the electronic unit is a cellular radio transceiver that is configured to provide a wireless communication link to a cell site according to a 6G, a 5G, a Long-Term Evolution (LTE), a Code Division Multiple Access (CDMA), a Global System for Mobile communication (GSM), an Enhanced Data rates for GSM Evolution (EDGE), or a Universal Terrestrial Radio Access Network (UTRAN) telecommunications protocol.

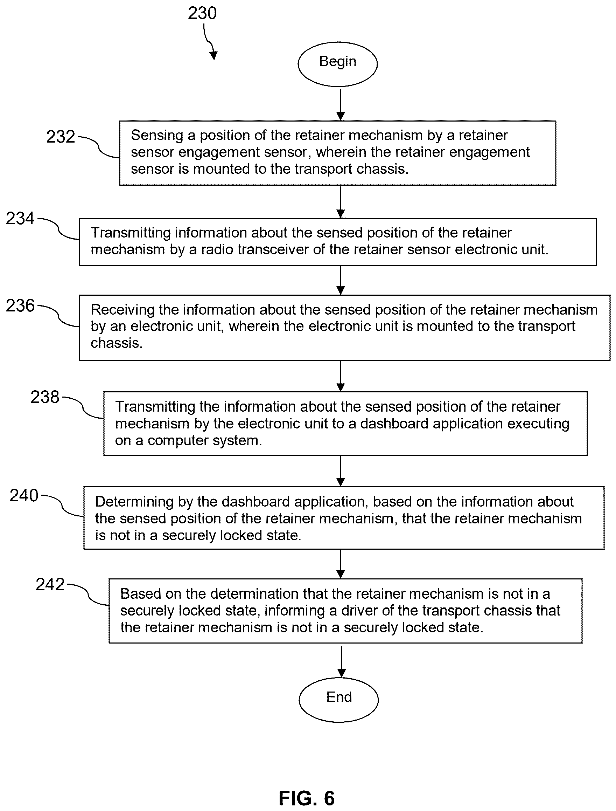

Turning now to FIG. 6, a method 230 is described. In an embodiment, the method 230 is a method of determining an engagement state of a retainer mechanism of a transport chassis with an intermodal container. At block 232, the method 230 comprises sensing a position of the retainer mechanism by a retainer engagement sensor, wherein the retainer engagement sensor is mounted to the transport chassis.

At block 234, the method 230 comprises transmitting information about the sensed position of the retainer mechanism by a radio transceiver of the retainer engagement sensor. At block 236, the method 230 comprises receiving the information about the sensed position of the retainer mechanism by an electronic unit, wherein the electronic unit is mounted to the transport chassis.

At block 238, the method 230 comprises transmitting the information about the sensed position of the retainer mechanism by the electronic unit to a dashboard application executing on a computer system. At block 240, the method 230 comprises determining by the dashboard application, based on the information about the sensed position of the retainer mechanism, that the retainer mechanism is not in a securely locked state. For example, the dashboard application 138 may determine that the retainer mechanism 106 is in an unlocked or in an intermediate state. At block 242, the method 230 comprises, based on the determination that the retainer mechanism is not in a securely locked state, informing a driver of the transport chassis that the retainer mechanism is not in a securely locked state.

In an embodiment, the method 230 further comprises sensing a position of the intermodal carrier by a radar sensor of the electronic unit; and transmitting information about the sensed position of the intermodal carrier by the electronic unit to the dashboard application. In an embodiment, the method 230 further comprises transmitting information about the sensed position of the retainer mechanism by the electronic unit to an in-cab display for presentation to a driver of a tractor towing the transport chassis. In an embodiment, the method 230 further comprises sending an indication of the sensed position of the retainer mechanism by the electronic unit to a signal light disposed at a rear of the transport chassis.

In an embodiment, the method 230 further comprises receiving information about the sensed position of retainer mechanisms by the dashboard from a plurality of different electronic units, wherein each different electronic unit is mounted to a different transport chassis. In an embodiment, the method 230 further comprises storing by the dashboard application information about the sensed position of the retainer mechanism from the plurality of different electronic units in a data store; analyzing by the dashboard application the information about the sensed positions of the retainer mechanism from the plurality of different electronic units; and based on analyzing the information, generating a report by the dashboard application a report summary on the state of the retainer mechanisms of the different transport chassis, whereby a supervising government agency can evaluate a safety record of a transport chassis operating organization.

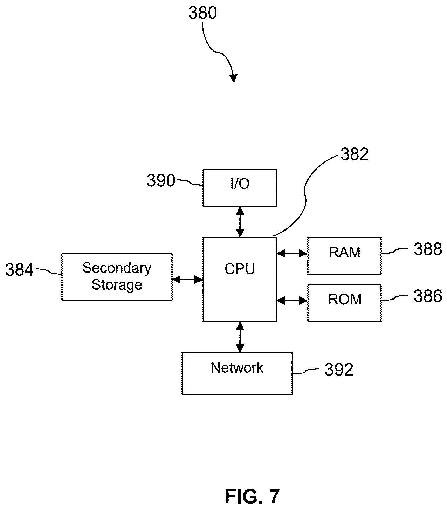

FIG. 7 illustrates a computer system 380 suitable for implementing one or more embodiments disclosed herein. For example, the computer 136 may be implemented in a form similar to that of the computer system 380. The computer system 380 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB IoT), near field communications (NFC), radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk-based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid-state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The processor 382 may process the executable instructions and/or data structures in part by directly accessing the computer program product, for example by reading from a CD-ROM disk inserted into a disk drive peripheral of the computer system 380. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A transport chassis to intermodal container retainer engagement monitoring system, comprising:
a retainer mechanism mounted to a transport chassis, wherein the retainer mechanism is configured to engage with and retain an intermodal container disposed on top of the transport chassis;
a retainer engagement sensor that comprises a sensor and a first radio transceiver, wherein the retainer engagement sensor is configured to detect an engagement position of the retainer mechanism; and
an electronic unit mounted to the transport chassis, wherein the electronic unit comprises a second radio transceiver and a third radio transceiver, a processor, a memory, and an application stored in a non-transitory portion of the memory that, when executed by the processor
receives a retainer engagement state indication from the first radio transceiver via the second radio transceiver,
determines an engagement state of the retainer mechanism based on the retainer engagement state indication, and
transmits information about the engagement state via the third radio transceiver.

2. The system of claim 1, wherein the retainer engagement sensor comprises at least one of an accelerometer that is coupled to a rotating lock portion of the retainer mechanism, a mechanical position switch, or a Hall effect sensor.

3. The system of claim 1 or 2, wherein the first radio transceiver and the second radio transceiver are short-range radio transceivers.

4. The system of any one of claims 1 to 3, wherein the first radio transceiver and the second radio transceiver are configured to establish a wireless communication link with each other according to one of a Bluetooth, a WiFi, a ZigBee, a Bluetooth Low Energy, or an IEEE 802.15 short-range wireless communication protocol.

5. The system of any one of claims 1 to 4, wherein the retainer mechanism is a twist-lock retaining mechanism or a pin-lock type retaining mechanism.

6. The system of any one of claims 1 to 5, wherein the system comprises a plurality of retainer mechanisms and a plurality of retainer engagement sensors, wherein each of the plurality of retainer mechanisms is associated with a corresponding one of the plurality of retainer engagement sensors, and wherein the application executed by the processor of the electronic unit receives a retainer engagement state indication from each of the plurality of retainer engagement sensors and transmits information about the engagement state of each of the plurality of retainer engagement sensors via the third radio transceiver.

7. A method of determining an engagement state of a retainer mechanism of a transport chassis with an intermodal container, comprising:
sensing a position of the retainer mechanism by a retainer engagement sensor, wherein the retainer engagement sensor is mounted to the transport chassis;
transmitting information about the sensed position of the retainer mechanism by a first radio transceiver of the retainer engagement sensor;
receiving the information about the sensed position of the retainer mechanism by a second radio transceiver of a electronic unit, wherein the electronic unit is mounted to the transport chassis;
determining an engagement state of the retainer mechanism by the electronic unit; and
transmitting information about the engagement state of the retainer mechanism by a third radio transceiver of the electronic unit.

8. The method of claim 7,
wherein the electronic unit determines the engagement state of the retainer mechanism to be one of a locked state, an unlocked state, or an intermediate state; and/or
wherein the electronic unit transmits information about the engagement state of the retainer mechanism by the third radio transceiver periodically.

9. The method of claim 7 or 8, wherein transmitting the information about the engagement state of the retainer mechanism by the third radio is triggered on the event of a change in the engagement state of the retainer mechanism.

10. The method of any of the claims 7 to 9, wherein the third radio transceiver of the electronic unit is a cellular radio transceiver that is configured to provide a wireless communication link to a cell site according to a 6G, a 5G, a Long-Term Evolution (LTE), a Code Division Multiple Access (CDMA), a Global System for Mobile communication (GSM), an Enhanced Data rates for GSM Evolution (EDGE), or a Universal Terrestrial Radio Access Network (UTRAN) telecommunications protocol.

11. A method of determining an engagement state of a retainer mechanism of a transport chassis with an intermodal container, comprising:
sensing a position of the retainer mechanism by a retainer engagement sensor, wherein the retainer engagement sensor is mounted to the transport chassis;
transmitting information about the sensed position of the retainer mechanism by a radio transceiver of the retainer engagement sensor;
receiving the information about the sensed position of the retainer mechanism by a electronic unit, wherein the electronic unit is mounted to the transport chassis;
transmitting the information about the sensed position of the retainer mechanism by the electronic unit to a dashboard application executing on a computer system;
determining by the dashboard application, based on the information about the sensed position of the retainer mechanism, that the retainer mechanism is not in a securely locked state; and
based on the determination that the retainer mechanism is not in a securely locked state, informing a driver of the transport chassis that the retainer mechanism is not in a securely locked state.

12. The method of claim 11, further comprising:
sensing a position of the intermodal carrier by a radar sensor of the electronic unit; and
transmitting information about the sensed position of the intermodal carrier by the electronic unit to the dashboard application.

13. The method of claim 11 or 12, further comprising at least one of:
transmitting information about the sensed position of the retainer mechanism by the electronic unit to an in-cab display for presentation to a driver of a tractor towing the transport chassis;
sending an indication of the sensed position of the retainer mechanism by the electronic unit to a signal light disposed at a rear of the transport chassis; or
receiving information about the sensed position of retainer mechanisms by the dashboard from a plurality of different electronic units, wherein each different electronic unit is mounted to a different transport chassis.

14. The method of any one of claims 11 to 13, further comprising:
storing by the dashboard application information about the sensed position of the retainer mechanism from the plurality of different electronic units in a data store;
analyzing by the dashboard application the information about the sensed positions of the retainer mechanism from the plurality of different electronic units; and
based on analyzing the information, generating a report by the dashboard application a report summary on the state of the retainer mechanisms of the different transport chassis, whereby a supervising government agency can evaluate a safety record of a transport chassis operating organization.

15. A computer-readable storage medium comprising instructions that, when executed by the processor in the transport chassis to intermodal container retainer engagement monitoring system according to any one of claims 1 to 6, cause the transport chassis to intermodal container retainer engagement monitoring system to perform the method according to any one of claims 7 to 14.
